# EUROPEAN PATENT APPLICATION

(11) **EP 4 716 115 A1**
(43) Date of publication of application: **25.03.2026**
(21) Application number: 24383000.7
(22) Date of filing: 19.09.2024
(51) Int. Cl.: H04B 10/297, H04Q 11/00, H04J 14/02, G02B 6/24

(54) **OPTICAL NETWORKING DEVICE**

(71) Applicant: IPronics Programmable Photonics S.L., 46010 València (ES)
(72) Inventor: The designation of the inventor has not yet been filed
(74) Representative: Barker Brettell LLP

(57) **Abstract**

An apparatus for switching, amplification and processing of optical signals comprises: a photonic processor (130) having a plurality of first ports (10la-d), a switching core (135), a plurality of processing channels (137a-d) and a plurality of second ports (102a-d). The switching core comprises a plurality of optical switches (35a-d). The optical switches are arranged to connect each of the first ports (101a-d) selectively to any of the second ports (102a-d) via one of the plurality of processing channels. An optical signal from each of the first ports (101a-d) is processed through a respective processing channel, and sent to a respective second port (102a-d). The apparatus further comprises an optical amplifier (170) which comprises a plurality of amplifying channels (170a-d), wherein one of the amplifying channels (170a-d) is configured to amplify the optical signal. The apparatus further comprise a connector (150), and the connector is configured to connect each of the processing channels (137a-d) of the photonic processor with a respective amplifying channel (170a-d) of the optical amplifier.

## Description

### Field of the Invention

The present invention relates to an apparatus for multi-channel switching of optical signals, to be used in networking systems such as datacentres, artificial intelligence infrastructures, high-performance computing and high-frequency trading.

### Background to the Invention

Artificial Intelligence (AI) innovation is facing a rapid and worldwide growth. The extensive deployment of AI technology across multiple industries is the main catalyst of an unprecedented increase in power consumption within datacentres. Such a sudden increase in power demand implies that datacentres will need to dramatically increase their efficiency and scalability. The traditional systems comprising only a few General Processing Units (GPUs) are no longer sufficient to process and compute the most recently programmed AI models, and the scalability limitations of these systems is significant.

In this context, networking devices play a crucial role in connecting computing resources of multiple datacentres architectures. Traditionally, networking devices have relied on electronic switches and fixed point-to-point electro-optic links, which are limited in bandwidth (i.e., amount of data that can be transmitted per unit of time through a channel) and in latency (i.e., the time taken for data to be transmitted from point A to point B of a network). For this reason, electronic networking devices are incapable of meeting the unprecedented scalability demands for datacentres caused by AI models. Similar networking issues affect in high-performance computing applications.

At present, the limitations of networking switches for datacentres remain significant. In particular, no solution has been presented for a networking device whose performance and scalability can meet the new demands imposed by the extensive use applications demanding big data movements.

The present invention set outs to alleviate these problems, and to provide an optical switching system that is suitable for use in future datacentres, artificial intelligence infrastructure and high-performance computing.

### Summary of Invention

According to a first aspect of the present invention there is provided an apparatus for per-channel switching, amplification and signal processing, the apparatus comprising a photonic processor having a plurality of first ports, a switching core, a plurality of processing channels and a plurality of second ports; wherein the switching core comprises a plurality of optical switches, the optical switches being arranged to connect each of the first ports selectively to any of the second ports via one of the plurality of processing channels; whereby an optical signal from each of the first ports can be processed through a respective processing channel, and sent to a respective second port; an optical amplifier comprising a plurality of amplifying channels, wherein one of the amplifying channels is configured to amplify the optical signal; and a connector, wherein the connector is configured to connect each of the processing channels of the photonic processor with a respective amplifying channel of the optical amplifier.

The apparatus may be arranged to perform fully transparent switching, amplification and processing of an array of optical signals without degrading the signal properties. In other words, the apparatus may support end-to-end transmission of optical signals independently of the signal properties, such as the signal bit rate, modulation format, wavelength and/or polarisation. Importantly, a fully transparent apparatus may be arranged to support all types of optical signals with a minimal requirement of electronic elements, which would pose limitations to bandwidth and scalability.

The apparatus may be used as an all-optical networking system, i.e., to provide an optical link between a plurality of servers or nodes. For example, the apparatus may be used for intra-datacentre connections, i.e., to route a plurality of optical signals, between different elements within a datacentre, such as servers, racks, GPUs or other nodes of the datacentre. This can be achieved through the switching core, comprising a plurality of optical switches, the optical switches being arranged to selectively connect each of a number of first ports of the photonic processor with a respective one of a number of second ports of the photonic processor, through a respective processing channel. The optical switches are arranged to switch the optical signals, and are therefore optically transparent, but may be controlled electronically. An optical signal may therefore be routed through the respective processing channel, to be sent from a first server within a datacentre to either a first recipient server, a second recipient server within said datacentre or another networking element.

Advantageously, the apparatus supports the operations of per-channel amplification and per-channel processing, of any of the received optical signal. Per-channel amplification occurs through the optical amplifier array. The optical signal is amplified over an amplifying channel of the optical amplifier. In this way, the optical amplifier may compensate for losses suffered by the optical signal. For example, the optical amplifier may amplify the optical signal by a factor that compensates for calculated losses within the processing channel, or any other component of the apparatus. The optical amplifier may compensate for losses suffered by the optical signal outside the apparatus (i.e., when propagating into media which are not part of the apparatus, such as an optical fibre array configured to receive the optical signal outputted by the apparatus or the network). In some examples, the optical amplifier amplifies the optical signals before these are sent through the processing channels of the photonic processor. In some other examples, the optical amplifier amplifies the optical signals after these have been processed through the photonic processor. The optical amplifier may be arranged to pre-compensate for losses that are predicted to affect the optical signal.

Advantageously, the apparatus can reduce the rapid degradation of the optical signals by being designed for parallel per-channel processing and amplification, through the plurality of processing channels and the plurality of amplifying channels, each of which is configured to compensate for the losses and/or non-idealities affecting a specific optical signal of a plurality of optical signals received by the apparatus. The combination of per-channel processing and amplification may improve the overall Bit Error Rate (BER) of each of a plurality of optical signals received by the photonic processor, specially in power-limited links. Other causes of optical signal degradation, such as optical fibre non linearities, waveguide and optical fibre chromatic or polarisation modal dispersion and cross-talk, could be minimised by the apparatus. In this way, the apparatus does not need to be integrated with electronic signal processing devices, which would impose considerable limitations to the bandwidth and the scalability of the optical link. Another advantage of this solution is that the apparatus does not rely on low-yield mechanical moving components as mirrors, cameras collimators and lenses, which suffer from low reconfiguration speed, bulky architectures and limited flexibility.

Advantageously, the plurality of the processing and amplifying channels allows for parallel processing and amplification of multiple optical signals and/or batches of optical signals. This allows for a more compact and efficient device for signal processing and amplification. Furthermore, per-channel processing and amplification provides for broadband operation, which enables the processing of wavelength-multiplexed signals. In other words, the device supports multiple optical signals having different wavelengths.

Advantageously, the connector provides for on-chip coupling between the photonic processor and the optical amplifier, which enhances the scalability and the performance of the apparatus.

Another advantage of the present invention is that it provides a highly scalable networking device. High scalability is guaranteed by the fact that processing, switching and amplification all occur through one apparatus. Furthermore, scalability is also enhanced by the modular nature of the apparatus, provided by the interconnection of the photonic processor and the optical amplifier through the interposer. Therefore, the apparatus may form a building block for a highly scalable optical network engine, wherein the optical network engine comprises a plurality of apparatus as outlined above.

In some arrangements, the optical switches of the switching core are switchable between a plurality of states, thereby to change which of the second ports is connected to each of the first ports. The optical switches of the switching core may be configured to be in one of the plurality of states, wherein each state corresponds to each first port being connected to a specific second port; and wherein the state of the optical switches is configured to be selectively changed to any of the plurality of states. For example, the optical switches of the switching core may be configured to selectively switch from a first state to a second state. In the first state, a first port of the photonic processor may be connected to a second port of the photonic processor. In the second state, said first port may be connected to an alternative second port of the photonic processor. In the second state, each of the first ports is connected to a respective second port, and at least one of the first ports is connected to a different second port, with respect to the first state. In this way, the photonic processor is able to selectively re-direct at least one optical signal received at a first port, from one second port to another, by switching from the first state to the second state. The photonic processor is able to selectively re-direct multiple optical signals simultaneously, by changing more than one connection between first and second ports, when the state of the optical switches changes. Because different ports of the photonic processor may be connected to different systems, such as different servers or nodes of a datacentre, the switching core can therefore re-direct optical signals from being transmitted to one or more particular server, GPU or any other node of the datacentre to being transmitted to another one or more server, GPU or other node of the datacentre. In other words, the photonic processor may switch, through the switching core, a plurality of optical links interconnecting different elements within a datacentre.

In some examples, the switching core is a bidirectional switching core, configured to support the propagation and switching of an optical signal in opposite directions through the plurality of optical switches.

In some examples, each processing channel of the photonic processor is configured to perform one or more signal processing tasks on the optical signal. Processing operations on optical signals in the photonic processor may provide a more fluid connection between elements of a datacentre (or similarly, between any pair of systems that are connected through the apparatus). Some examples of processing operations may be optical equalisation of the amplitude response of all the wavelengths, to compensate for power impairments and ensure proper reception, dispersion compensation of fibre cables, especially for C-Band (i.e., in the wavelength range 1530 - 1565 nm), noise filtering to clean Wavelength-Division Multiplexing (WDM) signals so that the signal to noise ratio is reduced, wavelength selective switching to distinguish between wavelengths, multiplexer and de-multiplexer systems, reconfigurable delay lines, phase shifters etc. Generally, processing operations at the photonic processor provide compensation for impairments of the optical link between two elements, such as servers, of a datacentres. Examples of impairments may be spectral losses in the datacentre network and non-idealities (e.g., non-linearities) of the optical amplifier or transmitter and receiver nodes.

In some arrangements, each of the plurality of processing channels is an optical processing channel. Each processing channel may comprise a respective waveguide. Alternatively, the processing channel may comprise a plurality of interconnected and/or coupled waveguides. An example of plurality of processing channels can be formed by a lattice filter circuit, comprising a series of phase shifters and Programmable Unit Cells (PUCs). A lattice filter circuit may provide both optical equalisation and dispersion compensation.

In some arrangements, the apparatus comprises a per-channel polarisation controller, which is configured to change the polarisation of at least one component of a received optical signal. The polarisation controller is typically configured to separate the components in the Transverse Electric (TE) polarisation and Transverse Magnetic (TM) polarisation of the received optical signal, then to change the polarisation of the TM component to TE polarisation, and finally to sum the two components together so that they propagate as a single, TE-polarised optical signal outside the polarisation controller. This is advantageous in cases where the apparatus has a polarisation-dependent response, and specifically works optimally with TE-polarised light, in which case, changing the polarisation state of the TM component of an optical signal to TE helps minimising losses through the apparatus. Various examples of photonic polarisation controller may be used. An example of polarisation controller comprises a polarisation splitter, a polarisation rotator, phase shifters and a combiner. A PUC with a photodetector may be incorporated to measure the power of the combined, TE-polarised optical signal before this is outputted from the polarisation controller.

In some arrangements, the apparatus comprises a power monitoring array, which is configured to measure the power of each received optical signal. The power monitoring array comprises a plurality of array first ports, a plurality of power monitoring channels and a plurality of array second ports. Each of the array first ports is connected to a respective one of the array second ports through a respective power monitoring channel. Each power monitoring channel is configured to measure the power of the respective optical signal, through a Programmable Unit Cell (PUC) and a photodetector. The photodetector may comprise a 2x2 Mach Zehnder Interferometer (MZI).

In some arrangements, the optical signal received in the photonic processor propagates from a first port of the photonic processor, through the polarisation controller and then through the power monitoring array, before being received into the switching core. In some arrangements, the polarisation controller is placed right after the first ports, so that the polarisation of the received optical signals is changed to be TE right after the optical signals have entered the photonic processor. This is advantageous if all the other components of the photonic processor (i.e., the power monitoring array, the switching core and the processing channels) have optimal efficiency in the TE polarisation. The power monitoring array may be placed between the switching core and the processing channels or between the polarisation controller and the switching core. In some arrangements, a first power monitoring array may be placed between the switching core and the processing channels ad a second power monitoring array may be placed between the polarisation controller and the switching core. In this way, the power of the optical signals can be measured both before and after switching. In some examples, multiple power monitoring arrays can be introduced in different parts of the apparatus.

In some arrangements, the connector is an optical interposer, wherein the optical interposer comprises a plurality of waveguides, whereby each waveguide connects a respective one of the processing channels with the respective amplifying channel of the optical amplifier array. In some arrangements, the waveguides are silicon nitride waveguides. Advantageously, the silicon nitride waveguides enable low-loss and broadband operation of the coupling between the photonic processor and the optical amplifier. Further, silicon nitride waveguides are characterised by a high fabrication tolerance, which is beneficial for mass-scale production. The optical interposer may allow effective coupling of the photonic processor to the optical amplifier independently of the geometry of the photonic processor and the optical amplifier. For example, the optical interposer may be designed to comprise a plurality of waveguides, whereby each waveguide connects a second port of the photonic processor to a respective amplifying channel of the optical amplifier independently of the geometry of the second ports and the amplifying channels.

In some alternative arrangements, the connector is a connecting fibre array, the fibre array comprising a plurality of optical fibres, wherein each optical fibre connects each processing channel with the respective amplifying channel of the optical amplifier.

The photonic processor, the connector (whether it is a connecting fibre array or an optical interposer, or a hybrid integration) and the optical amplifier may be arranged in a vertically-stacked packaged configuration. In this way, a highly compact and stable apparatus is achieved. However, the apparatus is not limited to this particular packaging configuration.

In some arrangements, the optical amplifier is a Semiconductor Optical Amplifier (SOA).

In some arrangements, the optical amplifier is a first optical amplifier, the connector is a first connector, and the apparatus further comprises a second optical amplifier, wherein the second optical amplifier comprises a plurality of second amplifying channels; and a second connector; wherein the first connector connects each of the first amplifying channels to a respective first port of the photonic processor, and wherein the second connector connects each of the second ports of the photonic processor to a respective second amplifying channel of the second optical amplifier. Each of the first and second connectors can either be optical interposers or fibre arrays.

In this way, the optical signal may be amplified both before entering the photonic processor and after being transmitted out of the photonic processor. Advantageously, this system is bidirectional, i.e., it supports per channel processing, switching and amplification for signals propagating in opposite directions along the apparatus (i.e., either from the first optical amplifier to the second optical amplifier or vice versa). This is provided by the presence of the two optical amplifiers, one having amplifying channels connected to respective first ports of the photonic processor, and one having amplifying channels connected to respective second ports of the photonic processor. The connectors have the function of coupling the photonic processor with the respective amplifiers with minimal losses, and in the most compact configuration. In some arrangements, the first and second connectors are both optical interposers comprising silicon nitride waveguides, enabling low-losses, broadband operation of the coupling between the photonic processor and the optical amplifier, and high fabrication tolerance.

In some arrangements, wherein the first optical amplifier is configured to amplify optical signals propagating in a first direction, the first direction being from the second port to the first port; wherein the second optical amplifier is configured to amplify optical signals propagating in a second direction, wherein the second direction is opposite to the first direction; wherein the first optical amplifier further comprises a first bypass channel, the first bypass channel being configured to allow optical signals propagating in the second direction to bypass at least one of the first amplifying channels; and wherein the second optical amplifier further comprises a second bypass channel, the second bypass channel being configured to allow optical signals propagating in the first direction to bypass at least one of the second amplifying channels. In this way, the apparatus provides for amplification of optical signals that have been processed by the photonic processor, regardless of the direction of propagation of the optical signals. Further, the bypass may be configured to allow optical signals to bypass at least of the respective optical amplifying channels before being processed by the photonic processor. In some arrangements, each amplifying channel has its respective bypass channel. In some arrangements, a particular bypass of the optical amplifier may allow optical signals to bypass more than one amplifying channel of the optical amplifier. In some arrangements, the optical amplifiers may amplify signals before and after being processed by the photonic processor.

In some arrangements, the photonic processor is configured to receive the optical signal from an optical fibre of a first fibre array. In some arrangements, the photonic processor is configured to transmit the optical signal into an optical fibre of a second fibre array. The optical fibres may be part of the apparatus, or alternatively not be part of the apparatus.

### Brief Description of the Drawings

**Figure 1** is a schematic diagram of an apparatus for per-channel switching, amplification and signal processing, according to an embodiment of the invention;
**Figure 2** is a schematic diagram of a photonic processor, forming part of the apparatus of Figure 1;
**Figure 3** is a schematic diagram of a photonic processor, forming part of the apparatus of Figure 1;
**Figure 4** is a schematic diagram of a polarisation controller, forming part of the photonic processor of Figure 3;
**Figure 5** is a schematic diagram of a power monitoring array, forming part of the photonic processor of Figure 3;
**Figure 6** is a schematic diagram of various examples of optical switches, forming part of the switching core of the photonic processor of Figure 3;
**Figure 7a** is a schematic diagram of a processing channel, forming part of the photonic processor of Figure 3;
**Figures 7b** and **7c** are graphs showing two examples of processing operations on optical signals that can be performed by said processing channels;
**Figure 8** is a schematic diagram of an optical interposer, forming part of the apparatus of Figure 1;
**Figure 9** is a schematic diagram of an optical amplifier, forming part of the apparatus of Figure 1;
**Figure 10** is a schematic diagram of a first fibre array coupled to a photonic processor, forming part of the apparatus of Figure 1;
**Figure 11** is a schematic diagram of a system, the system comprising an apparatus as illustrated in Figure 1, an electrical Integrated Circuit (IC) and a Central Processing Unit (CPU);
**Figure 12** is a schematic diagram of a system 1 comprising multiple apparatus as illustrated in Figure 1;
**Figure 13** is a schematic diagram of an apparatus, according to an embodiment of the invention;
**Figure 14** is a schematic diagram of an apparatus for per-channel switching amplification and signal processing, according to an embodiment of the invention;
**Figure 15a** is a schematic diagram of an optical amplifier of the apparatus of Figure 14; and
**Figure 15b** is another schematic diagram of the apparatus of Figure 14.

### Description of Preferred Embodiments

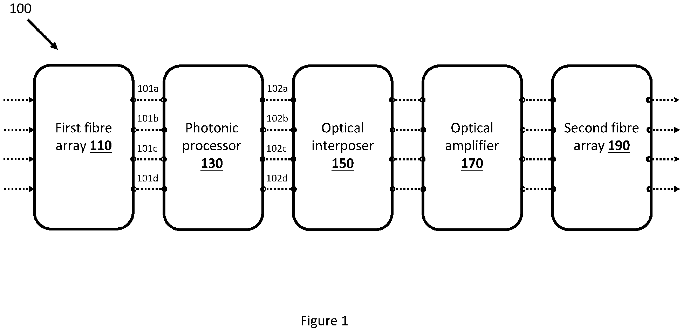

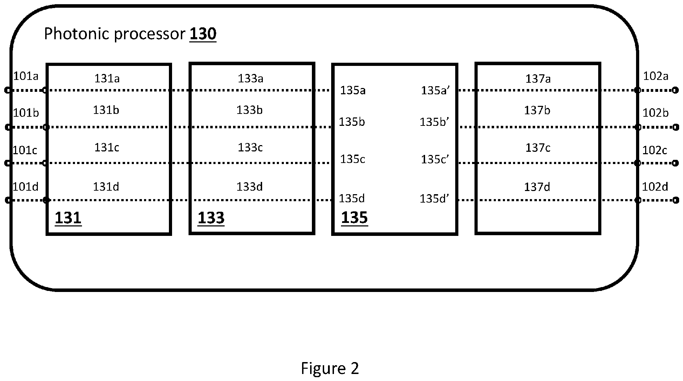

Referring to Figures 1 and 2, an apparatus 100 for per channel-switching, amplification and signal processing comprises a photonic processor 130, an optical interposer 150 and an optical amplifier 170. Specifically referring to Figure 2, the photonic processor 130 comprises a plurality of first ports 101a-d, a polarisation controller 131, a power monitoring array 133, a switching core 135, a plurality of processing channels 137a-d and a plurality of second ports 102a-d.

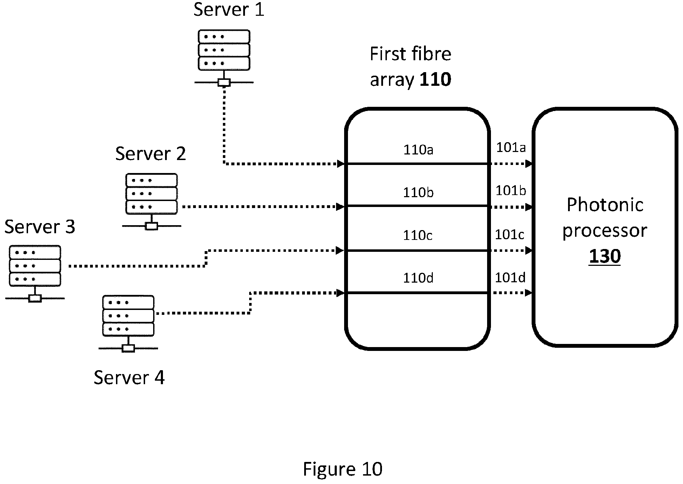

As shown in Figure 1, the photonic processor 130 is coupled to a first fibre array 110, an example of which is illustrated in Figure 10. With reference to Figures 1 and 10, each of the first fibres 110a-d of the first fibre array 110 is coupled to one of the first ports 101a-d of the photonic processor 130. The coupling between each of the first fibres 110a-d and each of the first ports 101a-d of the photonic processor 130 may be achieved through edge-coupling techniques, or any other coupling technique known in the art. Referring to Figure 10, each of the first fibres 110a-d of the first fibre array 110 is connected to a different server (i.e., server 1, 2, 3 or 4). The first fibre array 110 may be part of the apparatus 100, or alternatively not be part of the apparatus 100.

Referring to Figure 2, the polarisation controller 131 may comprise a plurality of polarisation controller channels 131a-d. Each first port 101a-d may be coupled to a respective polarisation controller channel 131a-d. The power monitoring array 133 may comprise a number of power monitoring channels 133a-d. Each of the polarisation controller channels 131a-d is coupled to a respective power monitoring channel 133a-d. The switching core 135 comprises a plurality of switching core first ports 135a-d, and a plurality of switching core second ports 135a'-d'. Each of the switching core first ports 135a-d is coupled to a respective power monitoring channel 133a-d of the power monitoring array 133. Each of the second ports 135a'-d' is connected to a respective processing channel 137a-d, with the respective processing channel 137a-d being connected to one of the second ports 102a-d of the photonic processor 130. The switching core 135 comprises a plurality of optical switches (not shown), the optical switches being arranged between the switching core first ports 135a-d and the switching core second ports 135a'-d'.

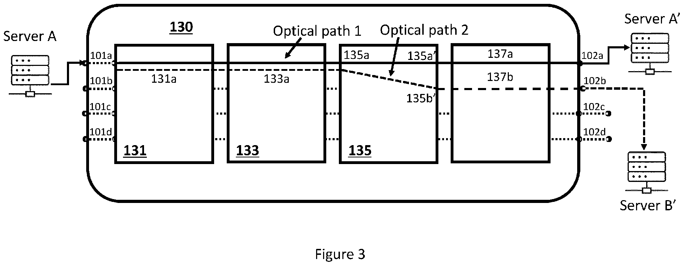

The optical switches are configured to connect each of the first ports 101a-d of the photonic processor 130 selectively with any of the second ports 102a-d of the photonic processor 130 via one of the plurality of processing channels 137a-d. Figure 3 illustrates an example of how the switching core 135 can selectively connect a first port 101a to either a second port 102a through the processing channel 137a, or to a second port 102b through the processing channel 137b.

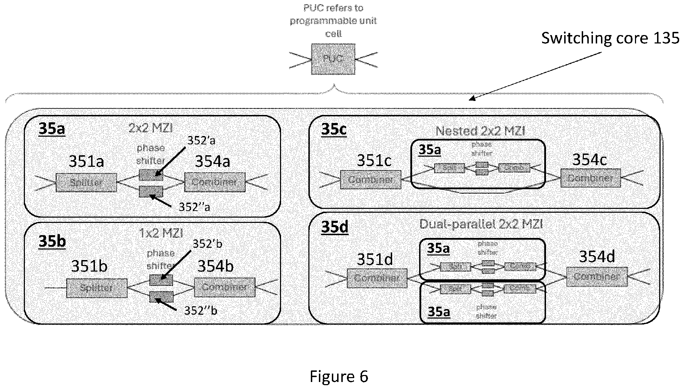

Figure 3 illustrates an example of how the apparatus 100 of Figure 1 can provide one or more optical links between elements within a datacentre. For simplicity, the first fibre array 110, the optical interposer 150, the optical amplifier 170 and the second fibre array 190 have been omitted from the figure. Furthermore, Figure 3 only illustrates the connection of one of the first ports to one of the second ports. However, each state of the optical switches may provide, simultaneously, multiple connections between each of the first ports 101a-d and each of the second ports 102a-d of the photonic processor 130, through a respective processing channel. Referring to Figure 3, the switching core 135 may be, at a first point in time T1, in a state S1, whereby the first port 135a is optically connected to the switching core second port 135a', through an optical path 1 (an optical path is a path through which an optical signal can propagate), shown in solid line in Figure 3. The optical path 1 starts at the first port 101a (which, in this case, is connected to server A) of the photonic processor 130, and then continues through the polarisation controller channel 131a, through the power monitoring channel 133a, through the switching core first port 135a, through the optical switches of the switching core 135 and through the switching core second port 135a'. Being the switching core second port 135a' connected to processing channel 137a, the optical path 1 then continues through processing channel 137a and ends at the second port 102a. Being the second port 102a connected to a server A', the optical path 1 connects server A to server A', so the photonic processor 130 provides an optical link between server A to server A'. Similarly to what described above, when the optical switches are in the state S1, connections between each of the remaining first ports 101b-d to each of the remaining second ports 102b-d may be simultaneously provided, through optical paths similar to optical path 1 (and therefore through a respective processing channel of the remaining processing channels 137b-d). Therefore, in state S1, the photonic processor 130 may provide multiple optical links, each optical link connecting a pair of servers to each other. For example, in the state S1, first port 101b may be connected to second port 102d, first port 101c may be connected to second port 102c and first port 101d may be connected to second port 102b. However, any other combination is possible. In some arrangements, the switching core 135 can connect one first port 101a to multiple second ports 102a-d (i.e., the switching core can perform multi-casting). In some examples, some ports may be idle, i.e., there may be no connection between a particular first port 101a-d and a particular second port 102a-d. The state of the switching core 135 may then, at a point in time T2, change from state S1 to state S2 (i.e., the configuration of the optical switches changes) such that the switching core first port 135a is not connected to the switching core second port 135a' through the optical path 1, but is connected to the second port 135b' through an optical path 2 (shown in dashed line). The optical path 2 is overlapped with optical path 1 between the first port 101a and the switching core first port 135a (in Figure 3 they are shown as parallel to each other and not overlapping in this part for illustrative purposes only), and then continues from switching core first port 135a to switching core second port 135b', and then through processing channel 137b, and finally ending at the second port 102b. Being the second port 102b connected to a server B', the optical path 2 connects server A to server B'. Therefore, when the optical switches are in the state S2, the photonic processor 130 provides an optical link between server A to server B'. Similarly to what described above, when the optical switches are in the state S2, connections between each of the first ports 101b-d to each of the remaining second ports 102a and 102c-d may be provided, through optical paths similar to optical path 2 (and therefore through a respective processing channel of the remaining processing channels 137a and 137c-d). Similarly to the state S 1, when the optical switches are in the state S2, the photonic processor 130 may provide a plurality of optical links between multiple servers, or GPUs or other nodes. Therefore, the optical switches can selectively switch the optical path along which a plurality of optical signals propagate through the apparatus 100, and in particular through the photonic processor 130. For example, the optical switches can selectively switch the optical path along which one of the plurality of optical signals propagates from optical path 1 to optical path 2, through a change of the optical switches state from S 1 to S2. Each of the optical switches forming the switching core 135 may be any suitable optical in the art, and in particular one of the examples illustrated in Figure 6. The state of the optical switches may be controlled and changed through standard techniques of programmable photonics.

The optical switches may be configured to be in a state S1, in which the optical switches simultaneously connect each of first ports 101a-d to each of the second ports 102a-d, through specific optical paths, so that any optical signal received at each of the first ports 101a-d will be propagated through an optical path to the respective second port 102a-d. For example, the optical switches in the state S1 connect first port 101a to a second port 102a through optical path 1, when in the state S1.The optical switches may be configured to switch, at a certain point in time, from state S1 to a state S2, in which the optical switches connect each first port 101a-d to each of the second ports 102a-d, and where at least one of the first ports 101a-d is connected to a different second port 102a-d with respect to state S1. For example, in state S2 the first port 101a may be switched to be connected to the second port 102b through optical path 2, instead of being connected to second port 102a through optical path 1. The switching core 135 may selectively connect each of the first ports 102a-d to each of the second ports 102a-d through the respective processing channel, in a similar way to what described above, in reference to Figure 3. The switching core 135 may connect any of the first ports 101a-d to any second port 102a-d at any point in time. Therefore, any server connected to one of the first ports 102a-d can be connected to any other server connected to one of the second ports 102a-d, at any point in time.

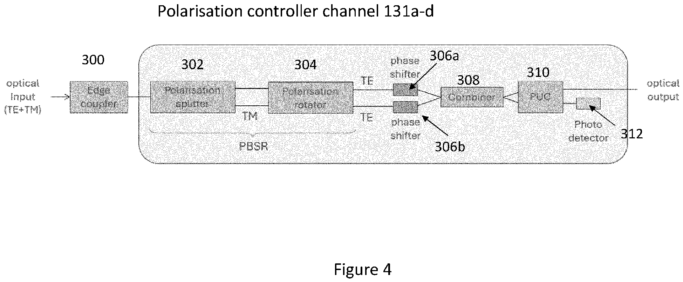

With reference to Figures 3 and 4, each polarisation controller channel 131a-d comprises a polarisation splitter 302, a polarisation rotator 304, two phase shifters 306a and 306b, a combiner 308, a PUC 310, and a photodetector 312. The input port of the polarisation splitter 302 is the input port of the polarisation controller 131, or at least directly coupled to the input port of the polarisation controller 131. The polarisation splitter 302 has two output ports, each of which is connected to a respective input port of the polarisation rotator 304. The polarisation rotator 304 has two output ports, each of which is coupled to a phase shifter 306a-b. Each phase shifter 306a-b has an output port. Both output ports of the two phase shifters 306a-b are coupled to a combiner 308. The output ports of the combiner 308 are coupled to a PUC 310, which has two output ports, one connected to a photodetector 312 and one connected to the output port of the polarisation controller 131. Below, there is an example of how each of the polarisation controller channels 131a-d works.

The input port of polarisation controller channel 131a receives an optical signal from an edge coupler 300, the optical signal comprising a TE component and a TM component. The polarisation splitter 302 splits the received optical signal in its TE and TM components. The TE-polarised component and the TM-polarised component of the received optical signal are then outputted through the respective output ports of the polarisation splitter 302, and sent to respective input ports of the polarisation rotator 304. The polarisation rotator 304 rotates the polarisation of the received TM-polarised signal, so that it becomes TE-polarised. The polarisation rotator 304 then transmits, through the respective output ports, two separate, TE-polarised optical signals. Each of the two TE-polarised optical signals are then received by the respective phase shifter 306a-b. The outputs of the phase shifters 306a-b are connected to the combiner 308, which combines the two signals received by the phase shifters 306a-b into a single, TE-polarised optical signal. The optical signal is then received by the PUC 310, which may either send the TE-polarised optical signal to the photodetector 312, to measure its power, or to the output port of the polarisation controller 131. The optical signal is then sent to the respective channel 133a of the power monitoring array 133.

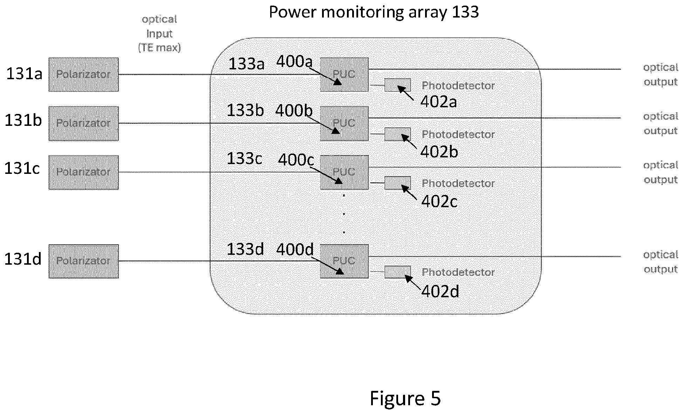

With reference to Figures 3 and 5, each channel 133a-d of the power monitoring array 133 comprises a PUC 400a-d, the PUC 400a-d comprising a 2x2 switch having two outputs. One output of the 2x2 switch is connected to a photodetector 402a-d, whilst the other output is coupled to the respective input port 135a of the switching core 135.

With reference to Figures 3 and 6, the switching core 135 comprises a plurality of optical switches 35a-d. Examples of optical switches may be 2x2 Mach-Zehnder interferometers (MZIs) 35a, 1x2 MZIs 35b, nested 2x2 MZIs 35c or dual-parallel 2x2 MZIs 35d. A 2x2 MZI 35a comprises a splitter 351a having two inputs and two outputs, two phase shifters 352'a and 352"a and a combiner 354a having two inputs and two outputs. Each of the splitter's outputs is connected to the respective phase shifter input and each of the phase shifter's outputs is connected to the respective input of the combiner 354a. A 1x2 MZI 35b is similar to the 2x2 MZI 35a, but the splitter 351b only has one input instead of two. A nested MZI 35c is a 2x2 MZI 35a in which one of the inputs of the splitter 351a and one of the outputs of the combiner 354a are, respectively, coupled to an output and an input port of two other combiners 351c and 354c. A dual-parallel 2x2 MZI 35d is formed by two 2x2 MZIs 35a which receive, in parallel, optical signals from an "input" combiner 351d, and send, in parallel, said optical signals to an "output" combiner 354d. Several combinations of optical switches are possible, within the switching core.

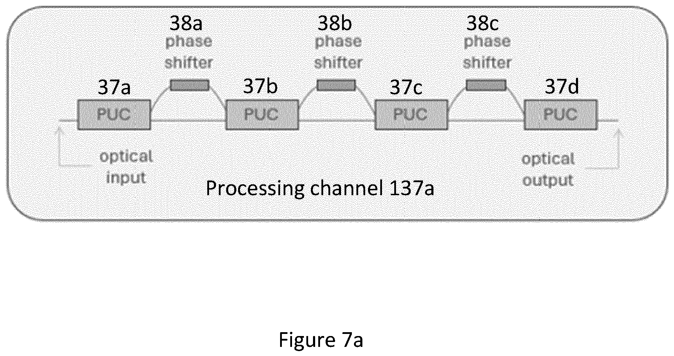

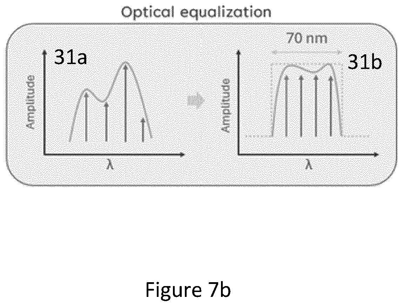

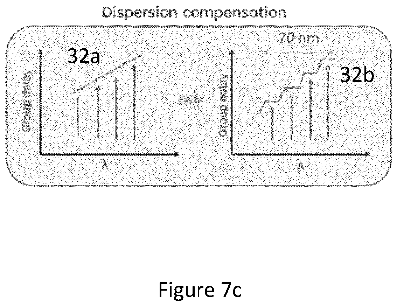

With reference to Figures 3 and 7a, an example of processing channel 137a-d may comprise a plurality of PUCs 37a-d connected in series. Each PUC 37a-d comprises a 2x2 switch having one output connected to a phase shifter 38a-c and another output connected to the next PUC 37a-d. The optical signal can therefore be sent through the phase shifter by each of the PUCs 37a-d. The phase shifters controlled changes in the phase of the optical signals, which can result in optical equalisation and/or dispersion compensation, as shown, respectively, in the graphs 31a, 31b and 32a, 32b illustrated in Figures 7b and 7c.

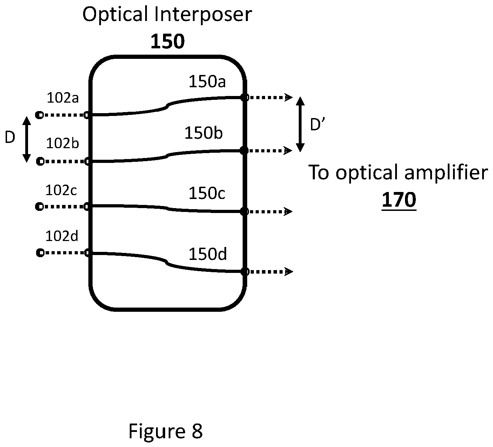

With reference to Figures 1 and 8, the optical interposer 150 comprises a plurality of waveguides 150a-d. Each waveguide connects a second port 102a of the photonic processor 130 to a respective amplifying channel 170a-d (described in more detail below) of the optical amplifier 170. The optical interposer 150 allows the effective coupling of two different devices (in this case, the photonic processor 130 and the optical amplifier 170). As shown in Figure 8, the second ports 102a-d may be aligned to have a certain distance D between each other. The optical amplifier 170, however, may have first ports 150a-d which are aligned to have a certain, different, distance D'. In similar cases, it is not possible to directly couple the second ports 102a-d of the photonic processor 130 to the first ports 170a-d of the optical amplifier 170 through conventional edge-coupling or other similar techniques, because of the geometrical mismatch of the two series of ports (in this case, the distance D is smaller than the distance D', but any other of geometrical mismatch between the two devices can also be considered). Therefore, the optical interposer 150 allows for coupling, by creating an optical path, through each respective waveguide 150a-d, that connects each second port 102a-d to each amplifying channel 170a-d of the optical amplifier 170. Each waveguide 150a-d may be a silicon nitride waveguide. In this way, the optical signal may be propagated through the waveguides 150a-d of the optical interposer 150 with minimal losses. Specifically, silicon nitride waveguides provide minimal losses of optical signals in the visible electromagnetic spectrum. Furthermore, silicon nitride waveguides benefit from high fabrication tolerance, advantageous for mass-scale production.

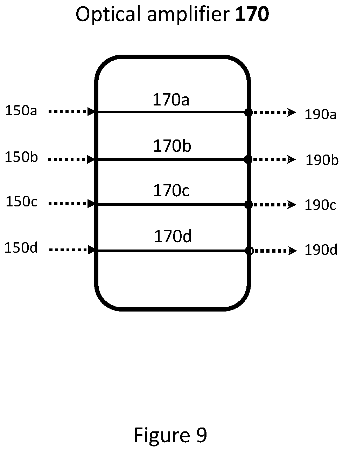

With reference to Figures 1 and Figure 9, the optical amplifier 170 comprises a plurality of amplifying channels 170a-d. Each amplifying channel 170a-d is coupled to a respective waveguide 150a-d of the optical interposer 150, as illustrated in Figure 8, through a first optical amplifier port. Each amplifying channel 170a-d is then coupled to a second fibre 190a-d of a second optical fibre array 190 (shown in Figure 1) through a second optical amplifier port. Each amplifying channel 170a-d is configured to amplify a received optical signal by a factor G. The second fibre array 190 may be part of the apparatus 100, or, alternatively, may not be part of the apparatus 100. An example of propagation of an optical signal through the apparatus 100 of Figure 1 will now be illustrated, with reference to Figures 1 to 3.

As illustrated in Figure 3, an optical signal is transmitted from server A to a first fibre 110a, and is then received at the first port 101a of the photonic processor 130. The optical signal is then processed within the photonic processor 130. With reference to Figure 2, the optical signal is processed by being propagated through optical path 1. Once received at the photonic processor 130 through first port 101a, the optical signal propagates through the polarisation controller channel 131a. The polarisation controller 131 is configured to modify in a deterministic way the polarisation state of the optical signal propagating through the polarisation controller channel 131a, such that the optical signal can be propagated through the rest of the optical path 1 with maximum efficiency. The propagation of the optical signals within the polarisation controller 131 has been described with reference to Figures 3 and 4 above. The optical signal then propagates through power monitoring channel 133a of the power monitoring array 133. The power monitoring channel 133a of the power monitoring array 133 comprises a power measuring device, such as the photodetector described above, with reference to Figures 3 and 5, which is configured to measure the power of the optical signal received at the power monitoring array channel 133a. In some circumstances, the power monitoring array channel 133a may determine the proportion of the power of the optical signal that needs to be sent to the switching core, acting as a Variable Optical Attenuator (VOA), so that the optical amplifier 170 can set a suitable gain accordingly to the power measured. The optical signal is then received at the switching core first port 135a. The optical switches of the switching core 135 selectively determine whether the optical signal will continue propagating through optical path 1, or if the optical signal will be re-routed to propagate through optical path 2 or any other similar optical path, not illustrated in Figure 3. If the switching core 135 determines that the optical signal continues propagating along optical path 1, the optical signal is then routed through processing channel 137a. The processing channel 137a may be configured to perform one or more signal processing tasks on the received optical signal. An example of signal processing task may be optical gain equalisation, which compensates for power impairments. Noise filtering may be used to improve the signal to noise ratio. After being processed through processing channel 137a, the optical signal is routed out of the photonic processor 130 at second port 102a. The optical signal is then received at waveguide 150a of the optical interposer 150, as illustrated in Figure 8. The optical signal is routed, via the waveguide 150a of the optical interposer 150, from the photonic processor 130 to a respective amplifying channel 170s of the optical amplifier 170, as illustrated in Figure 9. The optical signal is then amplified by the optical amplifier 170, at the amplifying channel 170a. The optical signal may be amplified by a factor G. The factor G may be higher than 1. In some arrangements, each amplifying channel 170a-d has a specific amplifying factor G. In some other arrangements, each amplifying channel 170a-d has the same amplifying factor G. After being amplified by the corresponding amplifying channel of the optical amplifier 170, the optical signal is then transmitted out of the optical amplifier 170 from a second amplifier port. The second amplifier port is connected to second optical fibre 190a of the second fibre array 190. The second optical fibre 190a is connected to server A', thus the apparatus 100 is an optical link between server A and server A'. Depending on the status of the optical switches of the switching core 135, the apparatus 100 can provide an optical link between server A and any other server. Figure 3 shows an example in which apparatus 100 is an optical link between server A and server A' through optical path 1, and between server A and B' through optical path 2.

In alternative embodiments to that of Figure 2, the photonic processor 130 may have any of the power monitoring array 133, the switching core 135 and the processing channels 137a-d arranged in a different order. For example, the optical signal may be received by the power monitoring array 133 after being transmitted through the switching core 135, and before being transmitted through the respective processing channel 137a-d. In some examples, the photonic processor 130 may not comprise a polarisation controller 131. For example, the polarisation controller 131 may not be necessary if the apparatus is not polarisation dependent, i.e., if the performance of the apparatus is not influenced by the polarisation of the optical signals received. However, when the polarisation controller 131 is present, this has to be placed before the power monitoring array 133, the switching core 135 and the processing channels 137a-d.

Each of the components of the apparatus 100 described above may be coupled to another component of the apparatus 100, and/or to one of the first 110 and second 190 fibre array through conventional coupling techniques known in the art. For example, a waveguide 150a of the optical interposer 150 may be coupled to the respective second port 102a of the photonic processor 130 and to the respective amplifying channel 170a through conventional edge-coupling techniques. A first and a second facet of the waveguide 150a may be respectively glued to the second port 102a-d and to a first facet of the amplifying channel, so that the photonic processor 130, the optical interposer 150 and the optical amplifier 170 are permanently aligned and coupled together. Said coupling techniques are conventional techniques known in the art, and will not be described in further detail here.

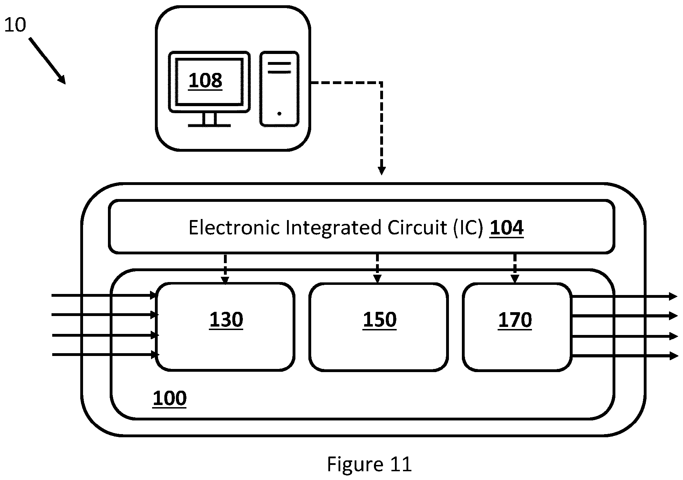

Figure 11 illustrates a system 10, the system 10 comprising the apparatus 100 of Figure 1, an electronic Integrated Circuit (IC) 104 and a Central Processing Unit (CPU) 108 within a computing device. A software program, comprising instructions for controlling one or more components of the apparatus 100 is executed by the CPU 108. The instructions for controlling the one or more components of the apparatus 100 are executed by the CPU 108 via the electronic IC 104. For example, the electronic IC 108 may control the photonic processor 130 and/or the optical amplifier 170 of the apparatus 100. The CPU 108 and electronic IC 104 control the apparatus 100 through conventional procedures and hardware known in the art, which are not described here. Alternatives to a CPU can be provided by any other suitable device, known in the art, for controlling of an electronic circuit, such as Field Programmable Gate Arrays (FPGAs).

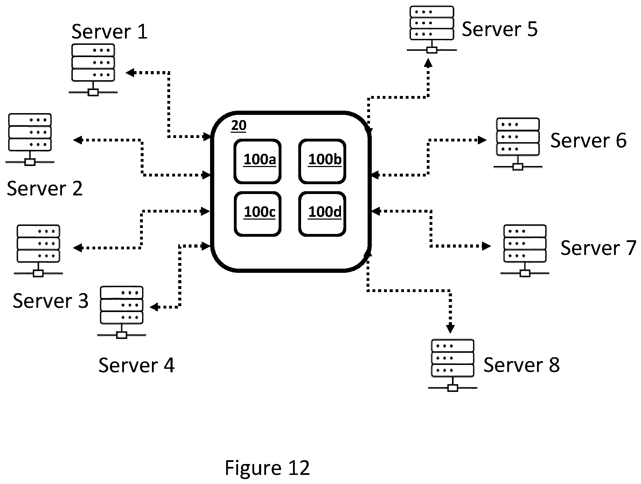

Figure 12 illustrates a system 20, the system 20 comprising multiple apparatus 100a-d. Each apparatus 100a-d is an apparatus 100 as illustrated in Figure 1. The system 20 may further comprise one or more CPUs (not shown) and/or one or more electronic ICs (not shown) as the CPUs and electronic ICs illustrated in Figure 11. The system 20 provides one or more optical links to connect servers 1 to 8 to one another. The system 20 may direct optical signals transmitted from any of servers 1 to 8 to any of servers 1 to 8. The system 20 may be cascadeable, because any number of apparatus 100a-b may be connected in series within system 20, to build larger networks. The higher the number of apparatus 100a-d within the system 20, the higher the number of servers that can be interconnected through the system 20.

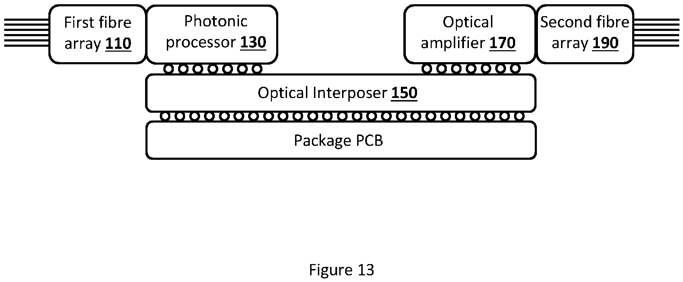

Referring to Figure 13, an apparatus 100, as the one illustrated in Figure 1, may be arranged in a vertically-stacked packaged configuration, in which the photonic processor 130, which is made on a Silicon Photonic Integrated Circuit (PIC), and the optical amplifier 170, which is a SOA, are both positioned on top of the optical interposer 150, which, in this example, is a silicon nitride interposer. The optical interposer 150 is positioned on top of a packaged Photonic Circuit Board (PCB), which may contain an electronic IC connected to a CPU as illustrated in Figure 11. The optical signals are received within the photonic processor 130 from a first fibre array 110 and are outputted from the SOA into a second fibre array 190. In this example, the vertical direction is a direction perpendicular to the wider surface of the packaged PCB (i.e., perpendicular to the surface on which the electronic IC and the CPU are located).

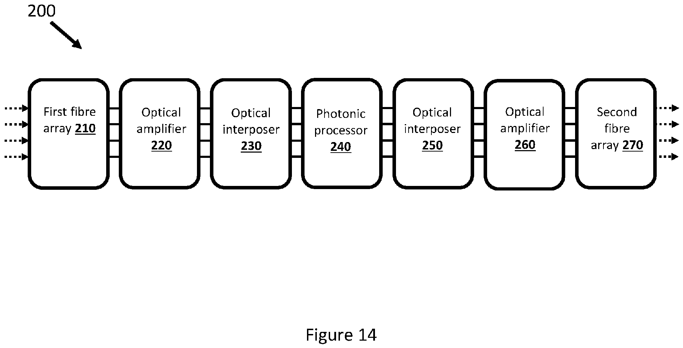

Referring to Figure 14, an apparatus 200 for per channel-switching, amplification and signal processing, which is similar to the apparatus 100 of Figure 1. The difference is that the apparatus 200 further comprises an additional optical amplifier 220 and the additional optical interposer 230, placed between the first fibre array 210 and the photonic processor 240. The components forming the apparatus 200 are similar to the corresponding components described for apparatus 100 with reference to Figures 1 to 10. The apparatus 200 is such that the optical signals received from each of the first fibres 210a-d of the first fibre array 210 are received into a respective amplifying channel 220a-d of the additional optical amplifier 220, and then, after being amplified, are driven through the additional optical interposer 230 to be received by the first ports 101a-d of the photonic processor 240. Therefore, the apparatus 200 provides for two amplification stages, a first stage before the optical signals enter the photonic processor 240, and a second stage after the optical signals are outputted from the photonic processor 240, and before the optical signals are received by the optical fibres 270a-d of the second fibre array 270. The presence of two optical amplifiers can provide higher flexibility, for example in circumstances where one amplifier cannot provide sufficient gain.

The apparatus 200 of Figure 14 is bidirectional, i.e., supports per-channel processing, amplification and switching of optical signals along opposite directions. Bidirectionality is provided by the presence of two optical amplifiers, on both sides of the photonic processor 240. In this way, amplification after the optical signals have been processed through the photonic processor 240 is always provided.

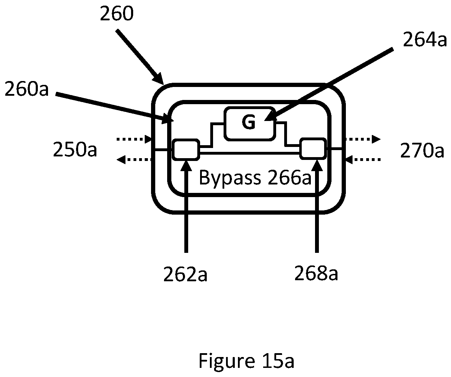

With reference to Figure 15a, the optical amplifier 260 of apparatus 200 is illustrated with further details. The optical amplifier 260 is reciprocal, in the sense that whether the optical signal propagates (with reference to Figure 14) from 250a to 270a or vice versa (from 270a to 250a), said signal will be amplified with the same gain G. For simplicity, only one amplifying channel 260a is illustrated, however, the description below of amplifying channel 260a applies to every other amplifying channel 260b-d of the optical amplifier 260 of Figure 15a. The amplifying channel 260a comprises a PUC 262a, an amplifying module 264a, a bypass channel 266a and a PUC 268a. PUC 262a is coupled to the respective waveguide 250a of the optical interposer 250 of system 200 (shown in Figure 14). The PUC 262a comprises two output ports, one coupled to the amplifying module 264a of the amplifying channel 260a, and the other one coupled to the bypass channel 266a, so that an optical signal can be switched to either propagate through the amplifying module 264a or through the bypass channel 266a. Each of the amplifying module 264a and the bypass channel 266a is coupled to a respective input port of the PUC 268a, which is coupled to the respective second optical fibre 270a of the second fibre array 270. The amplifying module 264a of the amplifying channel is reciprocal, in the sense that it can amplify with the same gain G signals coming from 250a to 270a and vice versa. For example, if an optical signal propagates into the optical amplifier channel 260a from second optical fibre 270a, the signal received in waveguide 250a will be amplified by a factor G. Similarly, if an optical signal is propagated into the optical amplifying channel 270a from waveguide 250a, the optical signal received into the second optical fibre 270a will be amplified by the same factor G.

The optical signal can be switched, by the switch comprised in the PUCs (either 262a or 268a, depending on the propagation direction of the signal), to be propagated through the bypass channel 266a, if amplification is not desired. When the optical signal propagates through the bypass channel 266a, the signal is not amplified. The bypass channel 266a may be a simple waveguide. The PUC 262a optical amplifier is programmable so that optical signals propagating in each amplifying channel can either be propagated through the respective bypass channel 266a or through the amplifying module 264a of the amplifying channel 260a. In alternative arrangements, each amplifying channel 260a-d can be programmed to apply a gain equal to zero to a received optical signal, when amplification is not desired, thus avoiding the inclusion of the selective input and output PUC and the bias waveguide.

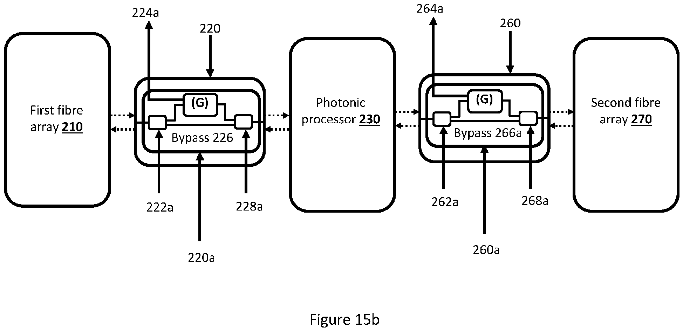

With reference to Figure 15b, the bidirectional system 200 of Figure 14 is illustrated, with more details for the optical amplifiers 220 and 260, whilst the optical interposers 230 and 250 have been omitted, and only one amplifying channel is illustrated, for simplicity. The optical amplifier 220 has a similar structure to what was described for optical amplifier 260, with reference to Figure 15a above. Both amplifiers are reciprocal, in the sense that they can both amplify signals coming from opposite directions (i.e., from first fibre array 210 to second fibre array 270 and vice versa) with the same gain G.

With reference to Figures 14 and 15a-b, an optical signal may be transmitted from the first fibre array 210, into the optical amplifying channel 220a of the optical amplifier 220, and may then be received, through the optical interposer 230, into the photonic processor 240. The amplifying channel 220a may be bypassed, by switching the optical signal to be propagated through the bypass channel 226a via PUC 222a. Alternatively, the optical signal may be amplified by the amplifying module 224a of the optical amplifying channel 220a. The optical signal is sent from the photonic processor 240, into the second amplifying channel 260a of the second amplifier 260, through the optical interposer 250. The optical signal is amplified by the second amplifying channel 260, and then sent to the respective second optical fibre 270a of the optical fibre array 270.

Similarly, an optical signal may be transmitted from the second fibre 270a of the second fibre array 270, into the optical amplifying channel 260a of the optical amplifier 260, and may then be received, through the optical interposer 250, into the photonic processor 240. Amplification in the amplifying channel 260a may be bypassed, by switching the optical signal to be propagated through the bypass channel 266a via PUC 268a, instead than through the amplifying module 264a. Alternatively, the optical signal may be amplified by the amplifying module 264a. The optical signal is then sent into the photonic processor 240, and then into the first amplifying channel 220a of the first amplifier 220, through the optical interposer 230. The optical signal is amplified by the first amplifying channel 220a, and then sent to the respective first optical fibre 210a of the optical fibre array 210. In this way, the apparatus 200 can support per-channel amplification, switching and processing of optical signals being propagated from a first server to a second server and vice versa.

Although the description above is done with respect to a first amplifying channel 220a and a second amplifying channel 260a, the same concept applies to any other amplifying channels of both optical amplifiers 220 and 260.

The system 10 described in Figure 11 may be implemented with the apparatus 200, instead of the apparatus 100. The system 20 described in Figure 12 may be implemented with multiple bidirectional apparatus 200a-d like the ones described in Figure 14, which render the system 20 bidirectional (i.e., per channel processing, switching and amplification is equally supported for optical signals propagating from server x to server y, but also from server y to server x). Alternatively, the system 20 described in Figure 12 may comprise both apparatus as illustrated in Figure 1 and as illustrated in Figure 14 above.

The apparatus 100 may be a photonic device. In some arrangements, the apparatus 100 is an integrated photonic device. The apparatus 200 may be a photonic device. In some arrangements, the apparatus 200 is an integrated photonic device.

## Claims

1. An apparatus for per-channel switching, amplification and signal processing, the apparatus comprising:
a photonic processor having a plurality of first ports, a switching core, a plurality of processing channels and a plurality of second ports;
wherein the switching core comprises a plurality of optical switches, the optical switches being arranged to connect each of the first ports selectively to any of the second ports via one of the plurality of processing channels;
whereby an optical signal from each of the first ports is processed through a respective processing channel, and sent to a respective second port;
an optical amplifier comprising a plurality of amplifying channels, wherein one of the amplifying channels is configured to amplify the optical signal; and
a connector, wherein the connector is configured to connect each of the processing channels of the photonic processor with a respective amplifying channel of the optical amplifier.

2. The apparatus of claim 1, wherein the optical switches of the switching core are switchable between a plurality of states, thereby to change which of the second ports is connected to each of the first ports.

3. The apparatus of any preceding claim, wherein the switching core is a bidirectional switching core, configured to support the propagation of optical signals in opposite directions through the plurality of optical switches.

4. The apparatus of any preceding claims, wherein each processing channel of the photonic processor is configured to perform one or more signal processing functions on the optical signal.

5. The apparatus of any preceding claim, wherein each of the processing channels of the photonic processor is an optical processing channel comprising a respective waveguide.

6. The apparatus of any preceding claim, wherein the photonic processor comprises at least one of a polarisation controller and a power monitor array.

7. The apparatus of claim 6, wherein the optical signal received in the photonic processor propagates from the first port of the photonic processor, through the polarisation controller and then through the power monitor array, before being received into the switching core.

8. The apparatus of any preceding claim, wherein the connector is an optical interposer, wherein the optical interposer comprises a plurality of waveguides, whereby each waveguide connects each processing channel with the respective amplifying channel of the optical amplifier.

9. The apparatus of any of claims 1 to 7, wherein the connector is a connecting fibre array, the fibre array comprising a plurality of optical fibres, wherein each optical fibre connects each processing channel with the respective amplifying channel of the optical amplifier.

10. The apparatus of any preceding claim, wherein the photonic processor, the connector and the optical amplifier are arranged in a vertically-stacked packaged configuration.

11. The apparatus of any preceding claim, wherein the optical amplifier is a Semiconductor Optical Amplifier.

12. The apparatus of any preceding claim, wherein the optical amplifier is a first optical amplifier, and wherein the connector is a first connector, the apparatus further comprising:
a second optical amplifier, wherein the second optical amplifier comprises a plurality of second amplifying channels; and
a second connector; wherein the first connector connects each of the first amplifying channels to a respective first port of the photonic processor, and wherein the second connector connects each of the second ports of the photonic processor to a respective second amplifying channel of the second optical amplifier.

13. The apparatus of claim 12, wherein the first optical amplifier is configured to amplify optical signals propagating in a first direction, the first direction being from the second port to the first port;
wherein the second optical amplifier is configured to amplify optical signals propagating in a second direction, wherein the second direction is opposite to the first direction;
wherein the first optical amplifier further comprises a first bypass channel, the first bypass channel being configured to allow optical signals propagating in the second direction to bypass at least one of the first amplifying channels; and
wherein the second optical amplifier further comprises a second bypass channel, the second bypass channel being configured to allow optical signals propagating in the first direction to bypass at least one of the second amplifying channels.

14. The apparatus of any preceding claim, wherein the photonic processor is configured to receive the optical signal from an optical fibre of a first fibre array.

15. The apparatus of any preceding claim, wherein the photonic processor is configured to transmit the optical signal into an optical fibre of a second fibre array.
